Europäisches Patentamt

European Patent Office

Office européen des brevets

(19)

(11) **EP 0 961 949 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.7: **G02F 1/163**

(21) Anmeldenummer: **98914785.5**

(22) Anmeldetag: **19.02.1998**

(86) Internationale Anmeldenummer:
**PCT/DE98/00492**

(87) Internationale Veröffentlichungsnummer:
**WO 98/037453 (27.08.1998 Gazette 1998/34)**

(54) **VERFAHREN ZUM BETREIBEN EINES ELEKTROCHROMEN ELEMENTES**

PROCESS FOR DRIVING AN ELECTROCHROMIC ELEMENT

PROCEDE DE COMMANDE D'UN ELEMENT ELECTROCHROME

(84) Benannte Vertragsstaaten:
**AT BE CH DE DK ES FI FR GB GR IT LI NL PT SE**

(30) Priorität: **20.02.1997 DE 19706918**

(43) Veröffentlichungstag der Anmeldung:
**08.12.1999 Patentblatt 1999/49**

(73) Patentinhaber: **Pilkington Deutschland AG
45884 Gelsenkirchen (DE)**

(72) Erfinder:
• **REICHMANN, Peter
  D-45884 Gelsenkirchen (DE)**

• **CARDINAL, Jens
  D-44319 Dortmund (DE)**

(74) Vertreter: **Tönhardt, Marion, Dr. et al
Forrester & Boehmert,
Pettenkoferstrasse 20-22
80336 München (DE)**

(56) Entgegenhaltungen:
**EP-A- 0 475 847         EP-A- 0 683 419
EP-A- 0 718 667         WO-A-97/28484**

**Beschreibung**

Die Erfindung betrifft ein Verfahren zum Betreiben eines elektrochromen Elementes, das aus mindestens den folgenden Schichten besteht:

- einer ersten Elektrodenschicht;
- einer ersten Schicht, in die reversibel Ionen einlagerbar sind;
- einer transparenten Ionenleitschicht;
- einer zweiten Schicht, in die reversibel Ionen einlagerbar sind; und
- einer zweiten Elekcrodenschicht;

wobei die erste und/oder die zweite Schicht, in die reversibel Ionen einlagerbar sind, eine elekrochrome Schicht ist und die andere dieser Schichten als Gegenelektrode zu der elektrochromen Schicht arbeitet, wobei an die Elektrodenschichten eine einen Umfärbevorgang hervorrufende Spannung angelegt wird, die Werte in einem Redoxstabilitätsbereich des elektrochromen Schichtsystems aufweist, und der durch das elektrochrome Element fließende Strom fortlaufend gemessen wird.

Der Begriff Umfärbevorgang bezeichnet dabei entweder ein willkürliches Einfärben, das heißt eine Minderung des Transmissions- oder Reflexionsgrads des elektrochromen Elements, insbesondere im sichtbaren Spektralbereich, oder aber ein Entfärben oder Bleichen, also eine Erhöhung des Transmissions- oder Reflexionsgrads. Er kann aber auch primär in einer Änderung des Farbortes der transmittierten oder reflektierten Strahlung bestehen. Spannungswerte in einem Redoxstabilitätsbereich des elektrochromen Schichtsystems meint Spannungen, bei denen das aus der elektrochromen Schicht, der Ionenleitschicht sowie der als Gegenelektrode arbeitenden Schicht bestehende elektrochrome Schichtsystem keine oder allenfalls sehr geringfügige irreversibel Veränderungen erfährt.

Das elektrochrome Element weist mindestens eine elektrochrome Schicht auf, die reversibel umgefärbt werden kann. Diese wird als Gegenelektrode entweder mit einer weiteren elektrochromen Schicht oder mit einer transparenten Ionenspeicherschicht, die ihre Transparenz durch die Einlagerung von Ionen nicht nennenswert ändert, kombiniert. Zur Vereinfachung werden im folgenden beide Schichten, in die reversibel Ionen einlagerbar sind, gemeinsam als elektrochrome Schichten bezeichnet.

Die zuvor aufgeführten Schichten des elektrochromen Elements können gegebenenfalls auch indirekt unter Zwischenschaltung weitere Schichten, wie z. B. Schutzschichten, Isolierschichten, optisch wirksamer Hilfsschichten, Referenzelektrodenschichten oder dergleichen, aufeinander folgen.

Zumindest eine der Elektrodenschichten ist eine transparente Schicht. Wenn das elektrochrome Element als transparentes Fensterelement mit variablem Transmissionsgrad eingesetzt werden soll, so wird auch die zweite Elektrodenschicht transparent sein. Soll hingegen das elektrochrome Element als Spiegel mit variablem Reflexionsgrad verwendet werden, so wird vorzugsweise eine der beiden Elektrodenschichten als opake Reflexionsschicht aus einem geeigneten Metall, wie Aluminium oder Silber, ausgebildet. Es ist aber auch möglich, mit zwei transparenten Elektrodenschichten zu arbeiten und eine zusätzliche metallische Reflexionsschicht vorzusehen. Im folgenden wird der Einfachheit halber nur von elektrochromen Elementen mit variablem Transmisssionsgrad die Rede sein, ohne daß jedoch die Erfindung hierauf beschränkt ist.

Durch die über die Elektrodenschichten an das elektrochrome Element angelegte Spannung kann dessen Transmissionsgrad verändert werden. Diese Veränderung erfolgt im Regelfall umso schneller, je höher die angelegte Spannung ist. Wird das elektrochrome Element allerdings nicht in optimaler Weise betrieben, ist also insbesondere die angelegte Spannung zu groß, so kann es dauerhaft geschädigt werden. Es wird dann möglicherweise das elektrochrome Element in seinem Transmissionsgrad nicht mehr veränderbar sein, oder der Unterschied zwischen minimalem und maximalem Transmissionsgrad ist unter ansonsten gleichen Umgebungsbedingungen nicht mehr so groß wie im ungeschädigten Zustand. Auch ist zu befürchten, daß das elektrochrome Element nicht mehr homogen einfärbt, wobei sich möglicherweise irreversibel eingefärbte oder nicht mehr einzufärbende Bereiche bilden.

Vor allem dann, wenn ein Polymerelektrolyt als Ionenleitschicht verwendet wird, besteht außerdem die Gefahr, daß das elektrochrome Element delaminiert, d. h. daß sich die Ionenleitschicht von den elektrochromen Schichten bereichsweise ablöst.

Je nach Einsatzgebiet des elektrochromen Elementes ist dieses mehr oder weniger hohen Temperaturschwankungen ausgesetzt. So kann beispielsweise bei einem elektrochromen Element, das in Kraftfahrzeugen als Fensterscheibe, Dachverglasung oder dergleichen eingesetzt wird, erwartet werden, daß es bei Temperaturen im Bereich von - 20°C bis + 80°C befriedigend arbeitet. Mit ähnlichen Temperaturen ist bei Anwendungen in der Außenhaut von Gebäuden, beispielsweise im Bereich von Gebäudefassaden, zu rechnen. Es ist bekannt, daß eine Temperaturerhöhung zu einer Verringerung des spezifischen Widerstandes der Systemkomponenten führt. Insbesondere der Widerstand der Ionenleitschicht kann mit einer Temperaturerhöhung drastisch abnehmen. Wenn keine geeigneten Maßnahmen getroffen werden, kann dies leicht dazu führen, daß bei höheren Temperaturen der Redoxstabilitätsbereich des elektrochromen Schichtsystems verlassen wird und irreversible Veränderungen auftreten.

Aus der EP 0 475 847 B1, nach der der Oberbegriff des Patentanspruches gebildet ist, ist ein Verfahren zum Betreiben eines elektrochromen Elementes bekannt, bei dem die an das elektrochrome Element angelegte Spannung temperaturabhängig ist. Die Temperatur wird dabei direkt mit einem Thermometer gemessen oder aber indirekt, indem vor jedem Umfärbevorgang ein Spannungspuls erzeugt wird, über den bei gleichzeitiger Strommessung der Widerstand der Ionenleitschicht bestimmt und daraus die Temperatur des elektrochromen Elementes ermittelt wird. Entsprechend der ermittelten Temperatur wird für eine vorgegebene Zeit eine Spannung an das elektrochrome Element angelegt. Wenn der gewünschte Transmissionsgrad erreicht ist, wird die Spannung abgeschaltet.

Die EP 0 718 657 A1 hat ein vom Benutzer beeinflußbares Verfahren zum Betreiben eines elektrochromen Elementes zum Gegenstand, das über eine Schnittstelle an bauartlich unterschiedliche elektrochrome Elemente, an die Umgebungstemperatur und an die Abmessungen des elektrochromen Elementes anpaßbar ist. Dabei soll die Spannung, mit der das elektrochrome Element betrieben wird, auch eine Funktion der Temperatur sein. Nachteilig bei dem bekannten Verfahren ist es, daß für jedes einzelne elektrochrome Element eine Anpassung der Steuerparameter an die Scheibenabmessungen erfolgen muß.

Die EP 0 683 419 A1 offenbart ein Verfahren zum Ansteuern eines elektrochromen Elementes, bei dem diesem ein Strom aufgeprägt wird.

Es ist die Aufgabe der vorliegenden Erfindung, ein Verfahren zum Betreiben eines elektrochromen Elementen zur Verfügung zu stellen, das in einem großen Temperaturbereich arbeitet, das weitgehend unabhängig von der Fläche des elektrochromen Elementes ist, das eine Veränderung des Transmissionsgrads über einen großen Bereich zuläßt, das eine ausreichend schnelle Umfärbung ermöglicht, und mit dem eine hohe Lebensdauer des elektrochromen Elementes erreichbar ist.

Dieses Aufgabe wird durch ein Verfahren nach Patentanspruch 1 gelöst. Vorteilhafte Ausgestaltungen sind Gegenstand der Unteransprüche.

Erfindungsgemäß ist vorgesehen, in einer Anlaufphase des Umfärbevorgangs die an das elektrochrome Element angelegte Spannung U stetig bis maximal zu einem temperaturabhängig vorgegebenen Endwert $U_{max}$ erhöht bzw. erniedrigt wird, wobei die Temperaturabhängigkeit des Endwertes $U_{max}$ bauartbedingt, jedoch unabhängig von der umzufärbenden Fläche für das elektrochrome Element festgelegt ist, und daß die Spannung U im Verlauf des Umfärbevorgangs abhängig vom Strom I geführt wird, wobei die Spannung U ihrem Betrage nach den Betrag des Endwertes $U_{max}$ nicht überschreitet. Der Endwert $U_{max}$ kann dabei für einen Einfärbevorgang einen anderen Betrag aufweisen, als für einen Entfärbevorgang.

Die Strommessungen erfolgen im Normalfall regelmäßig in immer gleichen, ausreichend kurzen Zeitabständen, typischerweise mehrere Male in der Sekunde. Es kann aber auch so vorgegangen werden, daß zum Beispiel in der Anlaufphase des Umfärbevorgangs Messungen in kürzeren Abständen vorgenommen werden als in späteren Phasen, weil sich in der Anlaufphase der Strom und die Spannung normalerweise am schnellsten ändern.

Für die meisten Anwendungsfälle wird es ausreichend sein, wenn die Temperaturabhängigkeit des Endwertes $U_{max}$ der Spannung U durch einen linearen Zusammenhang gegeben ist, beispielsweise

$$(1) \qquad U_{max} = A - B \cdot T,$$

wobei T die Temperatur des elektrochromen Elementes ist und A und B von der Bauart des elektrochromen Elementes bestimmte Konstanten sind, die empirisch zu ermitteln sind. Wenn T die Temperatur in °C ist, so entspricht A betragsmäßig derjenigen Spannung U, die bei 0°C maximal an das elektrochrome Element angelegt werden darf. Mit der Konstante B wird festgelegt, wie stark der Endwert $U_{max}$ der Spannung U bei Temperaturänderungen zu modifizieren ist. A und B können für einen Einfärbe- und einen Entfärbevorgang unterschiedlich sein. Sie sind charakteristisch für eine bestimmte Bauart eines elektrochromen Elementes, aber unabhängig von dessen Abmessungen. Sie können ausgehend von cyclovoltammetrischen Voruntersuchungen an den elektrochromen Schichten beispielsweisa durch systematische Versuchsreihen ermittelt werden, bei denen elektrochrome Elemente gleicher Bauart und Abmessungen mit verschiedenen Werten für $U_{max}$ bei verschiedenen Temperaturen betrieben werden und diejenigen betragsmäßig größten Spannungen ermittelt werden, bei denen die elektrochromen Elemente jeweils über eine große Anzahl (mind. etwa 1000 - 10000) von Umfärbezyklen keine nennenswerte Verschlechterung ihrer Umfärbeeigenschaften erfahren.

Ein wesentliches Merkmal der Erfindung ist die Regelung der an das elektrochrome Element angelegten Spannung U in Abhängigkeit vom Strom I. Die Erfindung nutzt die überraschende Erkenntnis, daß eine Auswertung von fortlaufenden Messungen des Stroms I eine Kenntnis der genauen Abmessungen des elektrochromen Elements für eine schonende Betriebsweise dieses Elements erübrigt. Dabei können die Meßwerte des Stroms I grundsätzlich auf unterschiedliche Weise zur Regelung der Spannung U verwendet werden. So kann beispielsweise vorgesehen werden, die Spannung U zunächst in der Anlaufphase bis auf den Endwert $U_{max}$ betragsmäßig zu erhöhen und sie danach auf dem erreichten Wert zu halten, bis der Strom I eine - wie weiter unten erläutert - auf den Maximalstrom $I_{max}$ bezogene, temperaturabhängige erste Schwelle unterschreitet, wonach die Spannung U betragsmäßig stetig oder in mehreren Stufen so erniedrigt wird, bis der Strom I eine ebenfalls auf den Maximalstrom $I_{max}$ bezogene, temperaturabhängige untere Abschaltschwelle erreicht. Vorteilhafterweise geschieht diese stromgeführte Regelung der Spannung U jedoch unter Zuhilfenahme eines aus Strom- und Spannungsmessungen ermittelten Rechenwertes für den Gesamtwiderstand $R_{ges}$ des elektrochromen Elementes.

Der Gesamtwiderstand $R_{ges}$ des elektrochromen Elementes kann bevorzugt in der Anlaufphase des Umfärbevorgangs aus der Spannung U und dem Strom I ermittelt werden. Zum Ausgleich eventueller Spannungs-Offsets (Leerlaufspannungen) wird dabei der Gesamtwiderstand $R_{ges}$ insbesondere aus der ersten Ableitung der Spannung U nach dem Strom I errechnet. Diese ergibt sich in erster Näherung durch die Bildung des Quotienten $\Delta U/\Delta I$ der Beträge von Spannungsdifferenz und Stromdifferenz zu aufeinanderfolgenden Zeitpunkten $t_i$, $t_{i+1}$, $\Delta U = |U(t_{i+1})-U(t_i)|$, $\Delta I = |I(t_{i+1})-I(t_1)|$. Die Genauigkeit der Berechnung kann dadurch erhöht werden, daß eine Mittelwertbildung aus mehreren zu verschiedenen Zeitpunkten ermittelten Quotienten $\Delta U/\Delta I$ vorgenommen wird. Durch die Durchführung der Messungen und der Berechnung in der Anlaufphase des Umfärbevorgangs kann eine Verfälschung der Meßergebnisse durch im Zuge des Umfärbens auftretende innere Spannungen weitgehend vermieden werden.

Da der Gesamtwiderstand $R_{ges}$ temperaturabhängig ist, kann aus diesem grundsätzlich auch auf die Temperatur T des elektrochromen Elementes geschlossen werden, wenn auf gesonderte Temperaturfühler verzichtet werden soll. Insbesondere bei großflächigen elektrochromen Elementen ist allerdings eine direkte Temperaturmessung mit Hilfe eines Temperaturfühlers wegen deren höherer Genauigkeit vorzuziehen.

Eine besonders hohe Lebensdauer des elektrochromen Elements kann dadurch erzielt werden, daß aus der Spannung U, dem Strom I sowie dem Gesamtwiderstand $R_{ges}$ eine Spannung $U_{eff}$, die elektrochemisch an den elektrochromen Schichten wirksam ist, errechnet und die Spannung U so geregelt wird, daß $U_{eff}$ dem Betrage nach einen vorbestimmten Wert $U_{eff,max}$, oberhalb dessen irreversible Veränderungen am elektrochromen Element auftreten können, nicht überschreitet. Dabei wird vorzugsweise die folgende Näherungsgleichung zur Ermittlung der an den elektrochromen Schichten elektrochemisch wirksamen Spannung $U_{eff}$ benutzt, deren Zustandekommen weiter unten erläutert wird:

$$(2) \qquad U_{eff} = U - I \cdot D \cdot R_{ges},$$

wobei D eine bedarfsweise zu verwendende, Näherungsfehler ausgleichende Korrekturgröße ist. Es wird in den meisten Fällen ausreichen, für D den Wert 1 zu verwenden. Zur Optimierung der Spannungsregelung im Hinblick auf eine möglichst lange Lebensdauer des elektrochromen Elements kann es aber vorteilhaft sein, mit einer durch orientierende Versuche zu ermittelnden von 1 abweichenden Korrekturgröße D zu arbeiten.

Denkbar sind z.B. Fälle, in denen die Messung des Gesamtwiderstands $R_{ges}$ erst zu einem relativ späten Zeitpunkt eines Umfärbevorgangs vorgenommen wird, in denen die Einzelwiderstände des elektrochromen Schichtsystems besonders stark vom Färbungszustand abhängen oder in denen die elektrochromen Schichten einen ungewöhnlich hohen Ohm'schen Widerstand aufweisen.

Ein schnelles und dennoch schonendes Umfärben wird auf steuerungstechnisch besonders einfache Weise erreicht, wenn nach dem Abschluß der Anlaufphase und solange die elektrochemisch an den elektrochromen Schichten wirksame Spannung $U_{eff}$ den maximal zulässigen Wert $U_{eff,max}$ dem Betrage nach nicht erreicht, die Spannung U im wesentlichen konstant auf dem am Ende der Anlaufphase erreichten Endwert $U_{max}$ gehalten wird. Es versteht sich, daß auch mit dem Betrage nach unter dem Endwert $U_{max}$ liegenden Spannungen U gearbeitet werden könnte. Ein solches Verfahren hätte aber längere Umfärbezeiten zur Folge, was normalerweise unerwünscht ist.

Ein Abschaltkriterium für die Spannung U kann, insbesondere falls eine vollständige Ein- oder Entfärbung gewünscht ist, erfindungsgemäß besonders einfach mit Hilfe des maximalen Stromes $I_{max}$, der während des Umfärbevorgangs geflossen ist, definiert werden. So kann festgelegt werden, daß die Spannung U dann abgeschaltet wird, wenn das Verhältnis von momentan fließendem Strom I zu maximalem Strom $I_{max}$ einen vorgegebenen, von der Bauart, der Art des Umfärbevorgangs sowie in der Regel von der Temperatur T bestimmten Wert unterschreitet.

Ist nur eine Teilumfärbung gewünscht, so kann beispielsweise der Transmissionsgrad oder der Reflexionsgrad des elektrochromen Elementes überwacht und die Spannung U abgeschaltet werden, wenn der Transmissionsgrad oder Reflexionsgrad einen vorgegebenen Wert erreicht.

Eine andere Möglichkeit besteht darin, die im elektrochromen Element seit Beginn des Umfärbevorganges geflossene Ladungsmenge zu ermitteln und die Spannung U abzuschalten, wenn die geflossene Ladungsmenge einen vorgegebenen Wert erreicht. Die geflossene Ladungsmenge kann dabei durch zeitliche Integration des Stromes I ermittelt werden.

Mit dem erfindungsgemäßen Verfahren gelingt es, sobald einmal die bauartbedingten Parameter A, B, D, $U_{eff,max}$ und das Abschaltverhältnis $I/I_{max}$ festgelegt sind, im wesentlichen unabhängig von der umzufärbenden Fläche des elektrochromen Elementes eine Selbstkalibrierung des Steuerungsverfahrens durchzuführen, die ein schonendes Betreiben des elektrochromen Elementes erlaubt. Es liegt im Rahmen der Erfindung, zur Verfeinerung und weiteren Optimierung des Steuerverzahrens verschiedene Größenklassen für elektrochrome Elemente zu definieren, innerhalb derer jeweils die gleichen bauartbedingten Parameter angewandt werden, z.B. in Schritten von etwa 0,5 - 1 m, bezogen auf die kürzeste Elementabmessung.

Das erfindungsgemäße Verfahren ermöglicht auf steuerungstechnisch einfache Weise eine schnelle, reproduzierbare und gleichmäßige Umfärbung von elektrochromen Elementen, wobei für eine Teilumfärbung ergänzende Abschaltkriterien herangezogen werden können. Es ist in der praktischen Ausführung maßgeblich durch seine Anlaufphase bestimmt, in der eine Selbstkalibrierung vorgenommen wird, d.h. in der wesentliche Steuerparameter des Verfahrens festgelegt werden.

Im folgenden soll die Erfindung anhand der beigefügten Zeichnungen näher erläutert werden. Es zeigt:

Figur 1      den schematischen Aufbau eines elektrochromen Elementes;

Figur 2      ein vereinfachtes Ersatzschaltbild für das elektrochrome Element der Figur 1;

Figur 3      ein stark schematisiertes Blockschaltbild zur Erläuterung der Meß- und Regelgrößen für das erfindungsgemäße Betreiben eines elektrochromen Elementes;

Figur 4      den schematischen Verlauf von Strom und Spannung, wenn das elektrochrome Element der Figur 1 nach einer bevorzugten Ausführungsform des erfindungsgemäßen Verfahrens betrieben wird;

Figur 5      eine Meßkurve für den Strom- und Spannungsverlauf bei einem Einfärbevorgang, der ein bevorzugtes Verfahren entsprechend der vorliegenden Erfindung ausnutzt, durchgeführt an einem elektrochromen Element mit den Abmessungen 70 cm · 100 cm; und

Figur 6      einen erfindungsgemäßen Entfärbevorgang bei einem elektrochromen Element entsprechend Figur 5.

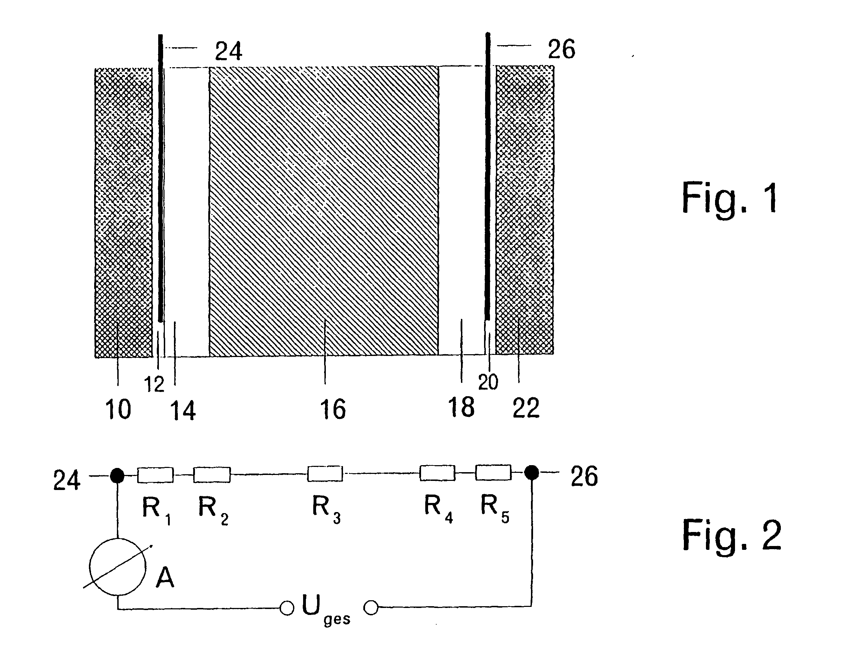

In Figur 1 ist schematisch der Aufbau eines beispielhaften elektrochromen Elementes dargestellt. Auf einem Glasträger 10 befindet sich eine erste transparente Elektrodenschicht 12, auf der als erste Schicht, in die reversibel Ionen eingelagert werden können, eine elektrochrome Schicht 14 vorgesehen ist. Eine transparente Ionenleitschicht 16, die als Polymerelektrolyt ausgeführt sein mag, trennt die elektrochrome Schicht 14 von der zweiten Schicht, in die reversibel Ionen eingelagert werden können, hier einer Ionenspeicherschicht 18, die als Gegenelektrode zur elektrochromen Schicht 14 arbeitet. Die Ionenspeicherschicht 18 kann als Schicht mit vom Einlagerungszustand im wesentlichen unabhängigem Transmissionsgrad ausgeführt sein. Sie kann aber auch über mehr oder weniger ausgeprägte elektrochrome Eigenschaften verfügen. Die Schichten 14, 18 werden zur Vereinfachung gemeinsam als elektrochrome Schichten 14, 18 bezeichnet, ohne daß der Anwendungsbereich des erfindungsgemäßen Verfahrens auf elektrochrome Elemente mit zwei einfärbbaren Schichten beschränkt ist.

Der Schichtaufbau ist symmetrisch ergänzt durch eine zweite transparente Elektrodenschicht 20 und eine Glasplatte 22. Die Elektrodenschichten 12 und 20 sind mit elektrischen Anschlüssen 24, 26 versehen, an die über nicht dargestellte Zuleitungen eine Steuerspannung U angelegt werden kann. Die elektrochrome Schicht 14 und die Ionenspeicherschicht 18 bestehen aus für diesen Zweck bekannten und geeigneten Materialien, wie sie beispielsweise in der EP 0 475 847 B1 aufgeführt sind, die Kationen, insbesondere Protonen oder $Li^+$-Ionen, reversibel einlagern können, wobei die elektrochrome Schicht 14 je nach Einlagerungszustand eine unterschiedliche Einfärbung aufweist.

Die an das elektrochrome Element angelegte Spannung U muß während des gesamten Umfärbevorgangs zwei Bedingungen erfüllen:

(I) Der Betrag der Spannung U darf den Betrag eines vorgegebenen, von der Temperatur T abhängigen Endwertes $U_{max}$ nicht überschreiten. Die Temperaturabhängigkeit dieses Endwerces $U_{max}$ ergibt sich aus der Bauart des elektrochromen Elementes und richtet sich vor allem nach den Materialien für die elektrochromen Schichten 14, 18 und für die Ionenleitschicht 16.

(II) Die Spannung $U_{eff}$, die elektrochemisch an den elektrochromen Schichten 14, 18 wirksam ist, darf einen bestimmten Wert $U_{eff,max}$ betragsmäßig nicht überschreiten. Da die an den elektrochromen Schichten 14, 18 herrschenden Potentiale nur mittelbar zu beeinflussen und nur mit großem Aufwand meßtechnisch erfaßbar sind, wird die an das elektrochrome Element angelegte Spannung U vorzugsweise auf Basis des in der Anlaufphase des Umfärbevorgangs ermittelten Gesamtwiderstands $R_{ges}$ und durch die Auswertung der fortlaufenden Messungen des Stroms I so geregelt, daß die Bedingung (II) stets eingehalten wird. Der maximal zulässige Betrag $U_{eff,max}$ der elektrochemisch an den elektrochromen Schichten 14, 18 wirksamen Spannung $U_{eff}$ hängt im Regelfall von verschiedenen Parametern ab, nämlich beispielsweise von der Temperatur T des elektrochromen Elements, von dessen Bauart und von der Art des Umfärbevorgangs (Einfärbung oder Entfärbung).

Die elektrochemisch an den elektrochromen Schichten 14, 18 wirksame Spannung $U_{eff}$ ist betragsmäßig gegenüber der außen an das elektrochrome Element angelegten Spannung U vermindert, und zwar um diejenigen Anteile, die an den Widerständen der verschiedenen anderen stromdurchflossenen Komponenten des elektrochromen Elements einschließlich dessen Zuleitungen abfallen. Die Spannung $U_{eff}$ ist zwar bei einem industriell zu vertretbaren Kosten herstellbaren elektrochromen Element einer direkten Messung nicht zugänglich. Sie kann aber mit ausreichender Genauigkeit näherungsweise berechnet werden, wie im folgenden erläutert wird.

Es zeigt Figur 2 ein vereinfachtes Ersatzschaltbild des elektrochromen Elementes nach Figur 1. Dabei ist $R_1$ der Ohm'sche Widerstand der Elektrodenschicht 12 einschließlich Anschluß 24 sowie etwaiger, nicht dargestellter Zuleitungen, $R_2$ der Ohm sche Widerstand der elektrochromen Schicht 14, $R_3$ der Ohm'sche Widerstand der Ionenleitschicht 16, $R_4$ der Ohm'sche Widerstand der Ionenspeicherschicht 18 und $R_5$ der Ohm'sche Widerstand der Elektrodenschicht 20 einschließlich Anschluß 26 sowie etwaiger, nicht dargestellter Zuleitungen.

Der Gesamtwiderstand $R_{ges}$ des elektrochromen Elements ergibt sich damit als Summe der Widerstände $R_1$ bis $R_5$;

$$R_{ges} = R_1 + R_2 + R_3 + R_4 + R_5.$$

Mit dem durch das elektrochrome Element fließenden Strom I erhält man hieraus die angelegte Spannung U entsprechend der Ohm schen Gleichung $U = I \cdot R_{ges}$, wobei die über den elektrochromen Schichten 14, 18 abfallenden Spannungsanteile $I \cdot R_2 + I \cdot R_4$ der zuvor erwähnten elektrochemisch wirksamen Spannung $U_{eff}$ entsprechen. Es gilt also:

$$U = U_{eff} + I \cdot (R_1 + R_3 + R_5)$$

oder - nach $U_{eff}$ aufgelöst -:

$$(3) \qquad U_{eff} = U - I \cdot (R_1 + R_3 + R_5).$$

Aus dieser Gleichung (3) kann unter der Annahme, daß jedenfalls in der Anlaufphase des Umfärbevorgangs die Widerstände $R_2$ und $R_4$ klein gegenüber $R_1 + R_3 + R_5$ sind, mit $R_{ges} \approx R_1 + R_3 + R_5$ die oben aufgeführte Näherungsgleichung (2) abgeleitet werden.

Aus Gleichung (3) bzw. Näherungsgleichung (2) ergibt sich unmittelbar, daß die elektrochemisch an den elektrochromen Schichten 14, 18 wirksame Spannung $U_{eff}$ über die Spannung U und mit Hilfe von Messungen des Stromes I geregelt werden kann. Der so berechnete Wert von $U_{eff}$ kann naturgemäß nur ein Näherungswert sein, da der Spannungsabfall I R insbesondere bei großflächigen elektrochromen Elementen nicht über die gesamte Fläche des Elementes konstant ist, sondern an den Rändern am größten ist, während er in dessen Mitte ein Minimum annimmt. Physikalisch korrekt wird das Widerstandsverhalten eines elektrochromen Elementes über komplexe Größen (Impedanzen) beschrieben. Die Bestimmung komplexer Impedanzen erfordert aber einen vergleichsweise hohen apparativen Aufwand, der wirtschaftlich nicht gerechtfertigt ist. Es hat sich gezeigt, daß in der Praxis zur Ermittlung der benötigten Betriebsparameter des Steuerverfahrens die Berücksichtigung nur des Ohm'schen Anteils der Impedanzen der Systemkomponenten einen völlig ausreichenden Näherungswert darstellt.

Aus den beiden obengenannten Bedingungen (I) und (II), die beim Betreiben des elektrochromen Elementes in einem Redoxstabilitätsbereich des elektrochromen Schichtsystems einzuhalten sind, bestimmen sich zusammen mit Näherungsgleichung (2) für jeden Zeitpunkt des Umfärbevorganges zwei Obergrenzen für den Betrag der an das elektrochrome Element anzulegenden Spannung U, die beide nicht überschritten werden dürfen:

$$(4) \qquad |U| \leq |U_{max}|$$

$$(5) \qquad |U| \leq |U_{eff,max} + I \cdot D \cdot R_{ges}|$$

Die Spannung U wird unter Auswertung der fortlaufenden Messungen des Stromes I so geregelt, daß die kleinere der sich aus den Relationen (4) und (5) ergebenden Obergrenzen betragsmäßig nicht überschritten wird.

Um einen Umfärbevorgang einzuleiten, wird an die elektrischen Anschlüsse 24 und 26 (Figur 1) des elektrochromen Elementes eine Spannung U angelegt, die von einer im stromlosen Zustand des elektrochromen Elementes meßbaren Leerlaufspannung $U_{EC}$ ausgeht. Die Spannung U wird nun - je nach Art des gewünschten Vorgangs - erhöht oder erniedrigt, wobei die Erhöhung oder Erniedrigung stetig vorgenommen wird, dabei aber nicht notwendigerweise linear verlaufen muß. Es versteht sich, daß je nach dem Vorzeichen der Leerlaufspannung $U_{EC}$ zunächst ein Nulldurchgang der Spannung U erfolgen kann, wobei also der Betrag der Spannung U zunächst abnimmt, bevor letztedlich ein Anstieg des Spannungsbetrages erfolgt. Der Anstieg des Spannungsbetrages und damit die Anlaufphase des Umfärbevorgangs wird spätestens dann beendet, wenn die niedrigere der Obergrenzen gemäß Relationen (4) und (5) erreicht wird.

Bei dem hier beschriebenen Verfahren liefert normalerweise zunächst Relation (4) die niedrigere Obergrenze, während die Obergrenze gemäß Relation (5) erst im weiteren Verlaufe des Umfärbevorganges zum Tragen kommt. Es kann aber auch vorkommen, daß der Anstieg des Betrags der Spannung U in der Anlaufphase des Umfärbevorganges durch Erreichen der Obergrenze gemäß Relation (5) und damit vor Erreichen des Endwertes $U_{max}$ beendet wird.

Während der Anlaufphase des Umfärbevorgangs wird erfindungsgemäß aus dem Quotienten $\Delta U/\Delta I$ wie zuvor definiert der Gesamtwiderstand $R_{ges}$ des elektrochromen Elementes ermittelt. Dabei wird vorzugsweise ein Mittelwert aus mehreren zu verschiedenen Zeitpunkten bestimmten Einzelwerten des Gesamtwiderstands $R_{ges}$ gebildet, um die Meßgenauigkeit zu erhöhen.

Im weiteren Lauf des erf indungsgemäßen Verfahrens wird bevorzugt, solange die Obergrenze gemäß Relation (5) höher ist als diejenige aus Relation (4), die Spannung U auf oder nahe dem Endwert $U_{max}$ gehalten. Der Strom I durch das elektrochrome Element sinkt in der Regel mit der Zeit ab. Damit verringert sich auch die Obergrenze aus Relation (5). Es ergibt sich dann im Regelfall nach einer gewissen Zeit die Situation, daß Relation (5) die niedrigere Obergrenze für den Betrag der Spannunc U liefert, so daß von da an die Spannung U entsprechend Relation (5) geregelt, das heißt im Regelfall entsprechend der zum Ende des Umfärbevorgangs fortschreitenden Abnahme des Stroms I betragsmäßig reduziert wird.

Der Strom I wird erfindungsgemäß auch nach der Anlaufphase fortlaufend gemessen, damit die Einhaltung der Relationen (4) und (5) durch Nachregeln der Spannung U ständig sichergestellt werden kann. Eine Unterschreitung der hierdurch gegebenen Obergrenzen ist dabei durchaus erlaubt, wobei hinsichtlich Größe, zeitlicher Dauer, Häufigkeit der Unterschreitungen und dergleichen grundsätzlich unter Sicherheitsgesichtspunkten keinerlei Einschränkungen bestehen. Es ist jedoch dabei stets zu berücksichtigen, daß eine Unterschreitung der zulässigen Obergrenzen für den Betrag der Spannung U die Zeiten bis zur vollständigen Umfärbung verlängert, was im Regelfall unerwünscht ist.

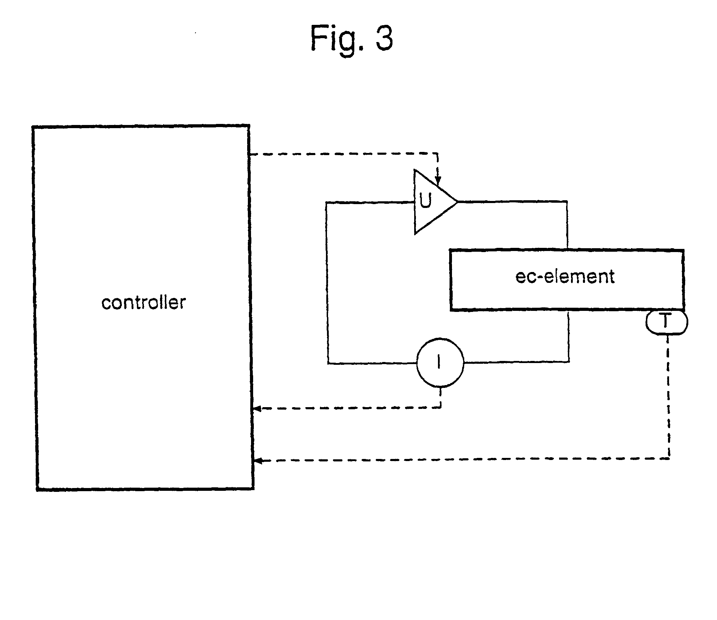

Figur 3 zeigt ein stark schematisiertes Blockschaltbild zur Erläuterung der Meß- und Regelgrößen beim erfindungsgemäßen Verfahren zum Betreiben eines elektrochromen Elements (ec-element). Die Temperatur des elektrochromen Elementes wird im Regelfall über einen geeigneten Temperaturfühler (mit T bezeichnet) ermittelt, dessen Meßwerte von dem den Umfärbevorgang überwachenden und steuernden Controller abgefragt werden. Der Temperaturfühler kann an geeigneter Stelle außerhalb oder innerhalb des elektrochromen Elements angeordnet werden. Weiterhin wird der durch das elektrochrome Element fließende Strom von einem mit I bezeichneten Meßgerät gemessen und werden die Meßwerte dem Controller zugeführt. Der Controller führt dann die Berechnungen wie oben ausgeführt durch und übermittelt die sich daraus ergebende Regelgröße an eine Spannungsquelle (mit U bezeichnet), die wiederum den eingeregelten Wert an das elektrochrome Element anlegt. Je nach Art der Spannungsquelle kann entweder die an die Spannungsquelle übermittelte Regelgröße direkt als Maß für die an das elektrochrome Element angelegte Spannung verwendet oder diese mit Hilfe eines gesonderten, nicht dargestellten Meßgerätes ermittelt werden. Der Controller, die Meßgeräte sowie die Spannungsquelle bilden zusammen eine Steuereinheit zur Durchführung des erfindungsgemäßen Verfahrens. Der Controller umfaßt u.a. Mittel zum Durchführen der erforderlichen Berechnungen (z.B. einen Mikroprozessor), zur Ein- und Ausgabe von Meß- und Regelgrößen sowie zur Speicherung der Steuerungsparameter sowie weiterer Gräßen wie z.B. des maximal geflossenen Stroms $I_{max}$.

Das Ende eines vollständigen Umfärbevorgangs ist dann erreicht, wenn der durch das elektrochrome Element fließende Strom I einen vorbestimmten Bruchteil des maximalen seit Beginn des Umfärbevorganges geflossenen Stromes $I_{max}$ unterschreitet. Der Wert dieses als Abbruchkriterium dienenden Verhältnisses $I/I_{max}$ wird bestimmt durch die Temperatur T und die Bauart des elektrochromen Elementes sowie die Art des ablaufenden Vorgangs, also Einfärbung oder Entfärbung. Da während des gesamten Umfärbevorgangs der Strom I fortlaufend gemessen wird, bedeutet es keine Schwierigkeit, einen Maximalwert $I_{max}$ zu ermitteln und für das Abbruchkriterium zu speichern.

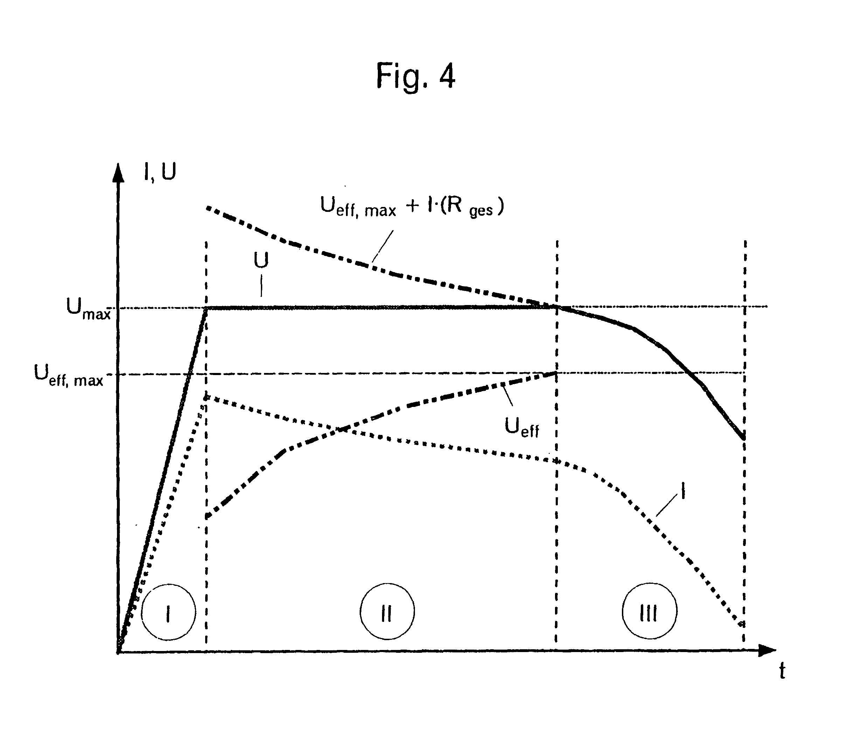

Das erfindungsgemäße Verfahren nach seiner bevorzugten Ausführungsform kann im Normalfall in drei Phasen unterteilt werden, wie sie in der Figur 4 dargestellt sind. Der Umfärbevorgang beginnt mit der als Anlaufphase bezeichneten Phase I, in der Spannung U und Strom I unter Vermeidung von Spannungs- oder Stromspitzen stetig erhöht bzw. erniedrigt werden, bis die Spannung einen vorgegebenen Endwert $U_{max}$ erreicht. Es schließt sich eine Phase II an, in der die Spannung U auf dem Endwert $U_{max}$ verharrt. Phase II nimmt im Regelfall die längste Zeit des Umfärbevorgangs in Anspruch. Phase III mit bis zum Erreichen eines Wertes gemäß dem erfindungsgemäßen Abbruchkriterium absinkendem Strom I und betragsmäßig abnehmender Spannung U schließt sich an, sobald die Obergrenze aus Relation (5) unter $U_{max}$ fällt. In der Anlaufphase wird der für den Zeitpunkt des Einsetzens der Phase III und für den zeitlichen Verlauf der in dieser Phase einzustellenden Spannung U wichtige Gesamtwiderstand $R_{ges}$ bestimmt. Der sanfte, stetige Anstieg des Stromes I und des Betrages der Spannung U in der Anlaufphase sorgt außerdem überraschenderweise für eine Vergleichmäßigung des Färbungsgrads über die Fläche des elektrochromen Elements.

Beispiel

Die Erfindung wird in der Anwendung für ein vollständig entfärbtes elektrochromes Element erläutert, bei dem beim Anlegen einer positiven Spannung U ein Strom I mit positiver Polarität durch das elekcrochrome Element fließt, der zu einer Einfärbung des Elementes führt. Ausgehend von einem eingefärbten Zustand des elektrochromen Elementes ruft eine Spannung U negativer Polarität einen Strom I negativer Polarität hervor, der zu einer Entfärbung des elektrochromen Elementes führt.

Eine geeignete Steuereinheit, bestehend aus Controller, Spannungsgeber und Meßgeräten nach dem Schema der Figur 3 stellt die erforderlichen Spannungen und Ströme zur Verfügung und mißt fortlaufend, bevorzugt in regelmäßigen zeitlichen Intervallen, die Spannung U, den Strom I und die Temperatur T. In der Praxis hat es sich bei Umfärbezeiten im Minutenbereich bewährt, den Strom I einige Male je Sekunde zu messen.

Das elektrochrome Element befindet sich im gewählten Beispiel zunächst im entfärbten Zustand. Zwischen den Anschlüssen des elektrochromen Elementes ist eine Leerlaufspannung $U_{EC}$ im stromlosen Zustand des elektrochromen Elementes meßbar. Ausgehend von dieser Leerlaufspannung $U_{EC}$ wird eine Spannung U an das elektrochrome Element angelegt, so daß ein Strom I, der zu einer Einfärbung des Elementes führt, fließt. Die Spannung U wird stetig und - abgesehen von einer Startphase mit zunehmender Steigung der Strom-Spannungs-Kurve - bevorzugt im wesentlichen linear mit der Zeit erhöht. Der Strom-Spannungs-Verlauf wird in jedem Falle so geregelt, daß keine Strom- oder Spannungsspitzen auftreten. Während dieser Phase des Ansteigens der Spannung U werden zu verschiedenen Zeitpunkten $t_i$, $t_{i+1}$ die werte der an das eiektrochrome Element angelegten Spannung $U(t_i)$, $U(t_{i+1})$ festgestellt. Zu den gleichen Zeitpunkten wird jeweils der durch das elektrochrome Element fließende Strom $I(t_1)$, $I(t_{i+1})$ gemessen. Aus den Wertepaaren $\Delta U = |U(t_i)-U(t_{i+1})|$ und $\Delta I = |I(t_i)-I(t_{i+1})|$ wird ein Widerstandswert $R_{ges}(t_i,t_{i+1})$ ermittelt. Sobald eine für eine Mittelung ausreichende Anzahl von Widerstandswerten vorliegt, spätestens aber mit dem Erreichen des Endwertes $U_{max}$, wird aus den Einzelwerten $R_{ges}(t_i,t_{i+1})$ das arithmetische Mittel gebildet und so der Gesamtwiderstand $R_{ges}$ errechnet. Der durch das elektrochrome Element fließende Strom I wird vom Beginn des Einfärbevorganges an fortlaufend gemessen, der größte in dieser Zeit gemessene Wert $I_{max}$ wird gespeichert.

Sobald die Spannung U den Endwert $U_{max}$ erreicht, ist die Anlaufphase (Phase I in Figur 4) beendet. Der Endwert $U_{max}$ ist temperaturabhängig. Ein einfacher Zusammenhang für die Temperaturabhängigkeit des Endwertes $U_{max}$ ergibt sich aus der bereits weiter oben aufgeführten Gleichung

$$(1) \qquad U_{max} = A - B \cdot T$$

wobei T die Temperatur ist. Die Parameter A und 3 müssen vorab für jede Bauart eines elektrochromen Elementes festgelegt werden. Sie sind von der Fläche des elektrochromen Elementes im wesentlichen unabhängig.

Mit dem Erreichen des Endwertes $U_{max}$ für die Spannung U beginnt Phase II (Figur 4), in der die Spannung U auf oder nahe unter dem Endwert $U_{max}$ verharrt, wenn eine möglichst rasche Einfärbung gewünscht ist. Auch während der Phase II wird der Strom I von der Steuereinheit fortlaufend gemessen. Wird zu irgendeinem Zeitpunkt ein größerer Wert für I gemessen, als bisher für $I_{max}$ gespeichert war, so wird der größere Wert von diesem Zeitpunkt an als $I_{max}$ gespeichert. Außerdem wird auf der Basis der Meßwerte für den Strom I fortlaufend überprüft, ob die Obergrenze gemäß Relation (5) noch höher ist als der aktuell für die Spannung U eingestellte Endwert $U_{max}$. Der in dieser Relation (5) verwendete Wert für die maximal zulässige elektrochemisch an den elektrochromen Schichten 14, 18 wirksame Spannung $U_{eff,max}$ ist in der Regel keine Konstante, sondern variiert in ähnlicher Weise wie $U_{max}$ mit der Temperatur T. Ergibt sich aus Relation (5), daß die hiernach ermittelte Obergrenze betragsmäßig unter den Endwert $U_{max}$ gesunken ist, so endet die Phase II.

In der sich unmittelbar anschließenden Phase III führt nun die Relation (5) zu einer betragsmäßigen Begrenzung der an das elektrochrome Element anzulegenden Spannung U. Da die Spannung $U_{eff}$, die elektrochemisch an den elektrochromen Schichten 14, 18 wirksam ist, über die Spannung U beeinflußt werden kann, wird in Phase III die Spannung U so geregelt, daß $U_{eff}$ den vorgegebenen Wert $U_{eff,max}$ nicht überschreitet. Die aus der Relation (5) berechenbare Obergrenze für den Betrag der Spannung U ist während der Phase III stets kleiner als der in Phase II als Obergrenze geltende Endwert $U_{max}$. Da der $U_{eff}$ gemäß Näherungsgleichung (2) beeinflussende Strom I sich zeitlich ändert, nämlich zum Ende des Umfärbevorgangs hin im Normalfall stetig abnimmt, muß U ständig durch die Steuereinheit nachgeregelt werden. Die Spannung U wird dabei bevorzugt auf die entsprechend Relation (5) betragsmäßig stetig abnehmende Obergrenze eingeregelt, um die Umfärbezeit möglichst klein zu halten. Auch während der Phase III wird zu diesem Zwecke der Strom I fortlaufend gemessen. Außerdem können die Meßwerte für den Strom I in dieser Phase verwendet werden, um festzustellen, wann die vollständige Einfärbung erreicht. Dieser Zeitpunkt ist erfindungsgemäß dann erreicht, wenn der Strom I im Verhältnis zum maximal geflossenen Strom $I_{max}$ unter einen vorgegebenen Schwellenwert fällt. Sobald die Steuereinheit feststellt, daß der Schwellenwert für $I/I_{max}$ und damit das Ende der Phase III erreicht ist, wird die Spannung U abgeschaltet und damit der Stromfluß durch das elektrochrome Element beendet. Der im Regelfall temperaturabhängige Schwellenwert für $I/I_{max}$ wird von der Bauart des elektrochromen Elementes und dem ablaufenden Vorgang (Einfärbung, Entfärbung) bestimmt und ist vorab durch einfache orientierende Versuche ermittelbar.

Der umgekehrte Vorgang des Entfärbens läuft im wesentlichen wie zuvor beschrieben ab. Ausgehend von einer Leerlaufspannung $U_{EC}$, die sich von derjenigen zu Beginn des Einfärbevorgangs normalerweise unterscheidet, wird in der Anlaufphase die Spannung U stetig erniedrigt, und zwar maximal bis zu einem in diesem Falle negativen Endwert $U_{max}$, dessen Betrag sich von demjenigen für den Einfärbevorgang unterscheiden mag. Es schließt sich die Phase II an, in der die Spannung auf dem Endwert $U_{max}$ solange verharrt, bis die Obergrenze aus Relation (5) betragsmäßig kleiner als $U_{max}$ wird. In der abschließenden Phase III nimmt die Spannung U sukzessive zu, d.h. betragsmäßig ab, bis sie wegen des Erreichens des Abschaltkriteriums, das von demjenigen für den Einfärbevorgang abweichen kann, abgeschaltet wird. Der Entfärbevorgang ist abgeschlossen, das elektrochrome Element befindet sich wieder im gleichen Zustand wie zu Beginn des Beispiels.

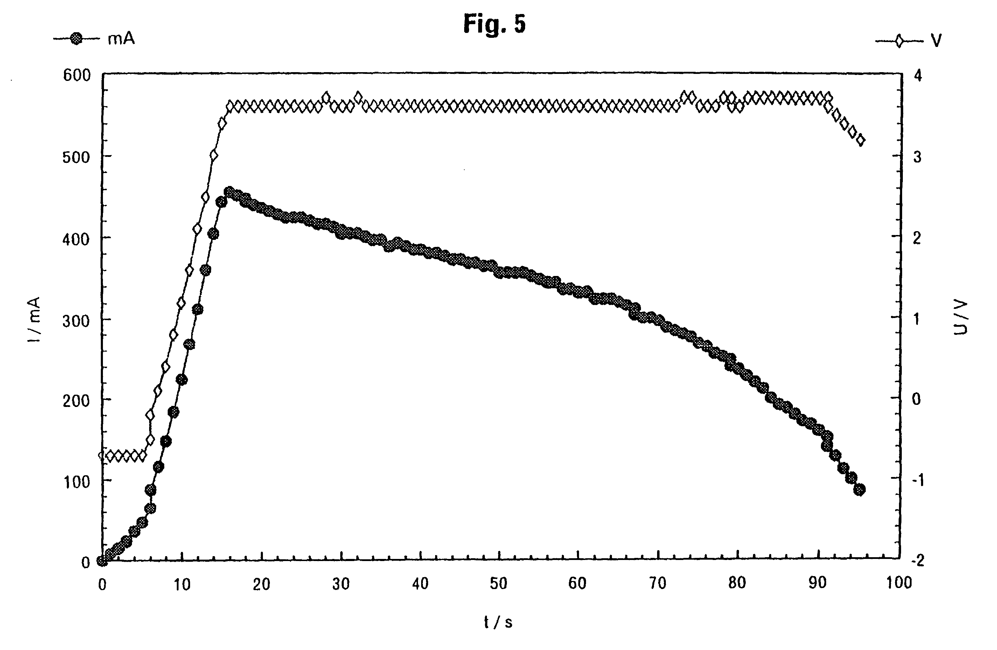

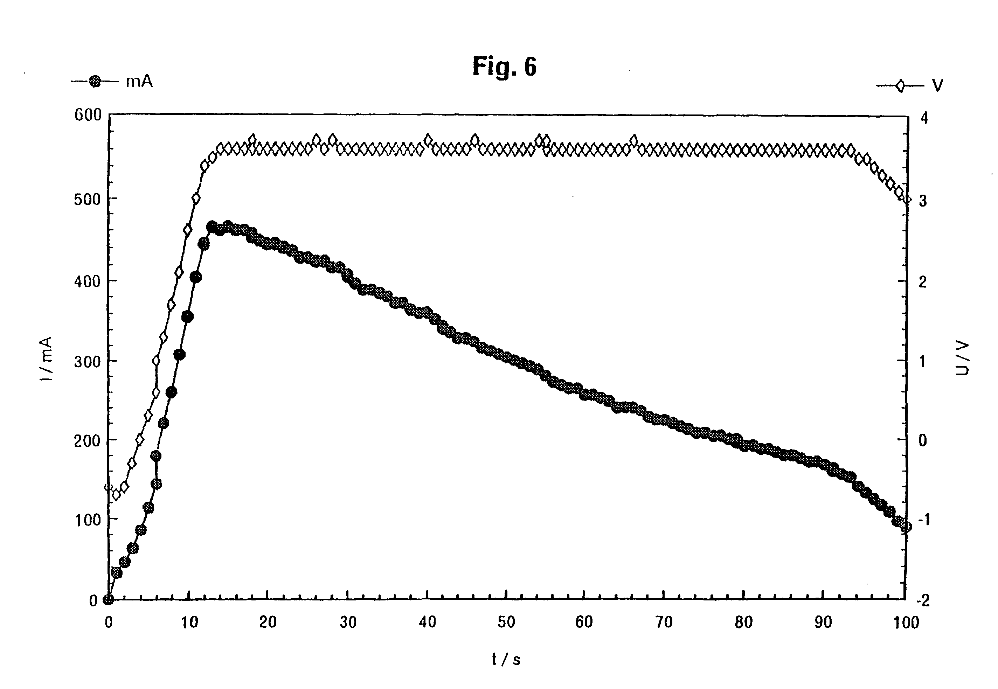

Die Figuren 5 und 6 zeigen für ein elektrochromes Element mit den Abmessungen 70 cm · 100 cm den Verlauf jeweils eines vollständigen Einfärbe- und Entfärbevorgangs bei Raumtemperatur, wobei die Spannung U und der Strom I jeweils als Funktion der Zeit t aufgetragen sind. Das elektrochrome Element (s. Fig. 1) wies zwei mit transparenten Elektrodenschichten 12, 20 aus ITO (Indiumzinnoxid) mit einem Flächenwiderstand von etwa 10 Ohm versehene Glassubstrate 10, 22 auf. Auf der Elektrodenschicht 12 war eine elektrochrome Schicht 14 aus $WO_3$ in einer Dicke von etwa 300 nm aufgebracht, während auf der Elektrodenschicht 20 eine ebenfalls etwa 300 nm dicke Ionenspeicherschicht 18 aus Certitanoxid angeordnet war. Als Ionenleitschicht 15 wurde ein Polymerelektrolyt entsprechend WO 95/31746 in einer Dicke von 1 mm verwendet. Die elektrischen Anschlüsse 24, 26 in Form von Metallstreifen wurden entlang der längeren Elementseiten einander diagonal gegenüberliegend angebracht und leitend mit den jeweiligen Elektrodenschichten 12, 20 verbunden. Die für die erfindungsgemäße Steuerung des Einfärbevorgangs und des Entfärbevorgangs erforderlichen Parameter wurden in einer Reihe von Vorversuchen (Cyclovoltametrie, zyklisches Umfärben bei verschiedenen Temperaturen über bis zu 1000 Zyklen an elektrochromen Elementen gleicher Bauart) ermittelt. Für $U_{eff,max}$ ergaben sich aus cyclovoltammetrischen Untersuchungen für beide Arten von Umfärbevorgängen Beträge von 2 V (20°C) bzw. 1 V (80°C), aus denen Beträge für andere Temperaturen durch lineare Extrapolation ermittelbar sind. Hiervon ausgehend wurde mit Hilfe weiterer systematischer Untersuchungen wie zuvor beschrieben die Beträge von $U_{max}$ bei 20°C zu 3,5 V und bei 80°C zu 2 V bestimmt. Damit ergaben sich die Beträge der Parameter A und B für Gleichung (1) zu A = 4 V und B = 0,025 V/°C (Temperatur T in °C), also $U_{max}$ = 4 V - 0,025 V/°C · T für den Einfärbevorgang und $U_{max}$ = -4 V + 0,025 V/°C · T für den Entfärbevorgang. Den Figuren 5 und 6 ist zu entnehmen, daß die Spannung U jeweils ausgehend von einer Leerlaufspannung von etwa -0,7 V (Einfärben) bzw. + 0,7 V Enzfärben) stetig erhöht bzw. erniedrigt wurde, wobei die Anlaufphase beim Einfärbevorgang nach etwa 16 s und beim Entfärbevorgang nach etwa 12 s durch Erreichen des Endwertes $U_{max}$ von + 3,5 V bzw. -3,5 V beendet war. Die Spannung U wurde danach etwa 75 s auf diesem wert gehalten, bis der Strom I so weit zurückgegangen war, daß die Obergrenze aus Relation (5) betragsmäßig unter $U_{max}$ fiel. Die Korrekturgröße D aus Relation (5) hatte dabei den wert 1. In Phase III wurde die Spannung U auf die betragsmäßig allmählich abnehmende Obergrenze gemäß Relation (5) eingeregelt. Der Strom I hatte seinen Maximalwert $I_{max}$ = 460 mA jeweils mit dem Ende der Anlaufphase erreicht. Die Phase III wurde in beiden Fällen beendet, wenn $I/I_{max}$ unter 20% fiel, was beim Einfärbevorgang nach etwa 95 s und beim Entfärbevorgang nach rund 100 s der Fall war. Bei einer Temperatur von 80°C lag das Abschaltverhältnis $I/I_{max}$ bei 50%.

Die in der Beschreibung, in der Zeichnung sowie in den Ansprüchen offenbarten Merkmale der Erfindung können sowohl einzeln als auch in beliebiger Kombination für die Verwirklichung der Erfindung wesentlich sein.

**Patentansprüche**

1. Verfahren zum Betreiben eines elektrochromen Elementes, das aus mindestens denfolgenden Schichten besteht:

   - einer ersten Elektrodenschicht;
   - einer ersten Schicht, in die reversibel Ionen einlagerbar sind;
   - einer transparenten Ionenleitschicht;
   - einer zweiten Schicht, in die reversibel Ionen einlagerbar sind; und
   - einer zweiten Elektrodenschicht;

   wobei die erste und/oder die zweite Schicht, in die reversibel Ionen einlagerbar sind, eine elektrochrome Schicht ist und die andere dieser Schichten als Gegenelektrode zu der anderen elektrochromen Schicht arbeitet, wobei an den Elektrodenschichten eine den Umfärbevorgang hervorrufende Spannung angelegt wird, die Werte in einem Redoxstabilitätsbereich des Systems aufweist, und der durch das elektrochrome Element fließende Strom (I) fortlaufend gemessen wird; **dadurch gekennzeichnet, daß** in einer Anlaufphase des Umfärbevorgangs die an das elektrochrome Element angelegte Spannung (U) stetig bis maximal zu einem temperaturabhängig vorgegebenen Endwert der Spannung ($U_{max}$) erhöht bzw. erniedrigt wird, wobei die Temperaturabhängigkeit bauartbedingt, jedoch unabhängig von der umzufärbenden Fläche für das elektrochrome Element festgelegt ist; und daß die Spannung (U) im Verlauf des weiteren Umfärbevorgangs abhängig vom Strom (I) geführt wird, wobei die Spannung (U) ihrem Betrage nach den Betrag des Endwertes der Spannung ($U_{max}$) nicht überschreitet.

2. Verfahren nach Anspruch 1, **dadurch gekennzeichnet, daß** die Temperaturabhängigkeit des Endwertes ($U_{max}$) der Spannung durch die Gleichung

$$U_{max} = A - B \cdot T$$

gegeben ist, wobei T die Temperatur des elektrochromen Elementes ist und A und B durch die Bauart des elektrochromen Elementes bestimmte Konstanten sind.

3. Verfahren nach Anspruch i oder 2, **dadurch gekennzeichnet, daß** der Gesamtwiderstand ($R_{ges}$) des elektrochromen Elementes in der Anlaufphase des Umfärbevorgangs aus der Spannung (U) und dem Strom (I) ermittelt wird.

4. Verfahren nach Anspruch 3, **dadurch gekennzeichnet, daß** der Gesamtwiderstand ($R_{ges}$) des elektrochromen Elementes aus dem Quotienten $\Delta U/\Delta I$ von Spannungsdifferenz ($\Delta U$) und Stromdifferenz ($\Delta I$) zu aufeinanderfolgenden Zeitpunkten berechnet wird.

5. Verfahren nach Anspruch 4, **dadurch gekennzeichnet, daß** der Gesamtwiderstand ($R_{ges}$) des elektrochromen Elementes durch Mittelwertbildung aus mehreren zu verschiedenen Zeitpunkten ermittelten Werten des Quotienten $\Delta U/\Delta I$ berechnet wird.

6. Verfahren nach einem der Ansprüche 3 bis 5, **dadurch gekennzeichnet, daß** die Temperatur (T) des elektrochromen Elementes aus seinem Gesamtwiderstand ($R_{ges}$) ermittelt wird.

7. Verfahren nach einem der vorangehenden Ansprüche, **dadurch gekennzeichnet, daß** aus der Spannung (U), dem Strom (I) sowie dem Gesamtwiderstand ($R_{ges}$) eine Spannung ($U_{eff}$), die elektrochemisch an den elektrochromen Schichten wirksam ist, berechnet wird.

8. Verfahren nach Anspruch 7, **dadurch gekennzeichnet, daß** die elektrochemisch an den elektrochromen Schichten wirksame Spannung ($U_{eff}$) nach der Gleichung

$$U_{eff} = U - I \cdot D \cdot R_{ges}$$

berechnet wird, wobei D eine unter anderem vom Schichtwiderstand des elektrochromen Elementes abhängige Korrekturgröße ist.

9. Verfahren nach Anspruch 7 oder 8, **dadurch gekennzeichnet, daß** die an das elektrochrome Element angelegte Spannung (U) so geregelt wird, daß die elektrochemisch an den elektrochromen Schichten wirksame Spannung ($U_{eff}$) dem Betrage nach einen vorbestimmten Wert ($U_{eff,max}$) nicht überschreitet.

10. Verfahren nach Anspruch 9, **dadurch gekennzeichnet, daß**, solange die an den elektrochromen Schichten wirksame Spannung ($U_{eff}$) den maximal zulässigen Wert ($U_{eff,max}$) dem Betrage nach nicht erreicht, die Spannung (U) im wesentlichen konstant auf dem Endwert ($U_{max}$) gehalten wird.

11. Verfahren nach einem der Ansprüche 1 bis 10, **dadurch gekennzeichnet, daß** aus den während des Umfärbevorgangs ermittelten Meßwerten für den Strom (I) ein maximaler Strom ($I_{max}$) ermittelt wird.

12. Verfahren nach Anspruch 11, **dadurch gekennzeichnet, daß** die Spannung (U) abgeschaltet wird, wenn das Verhältnis von momentan fließendem Strom (I) zu maximalem Strom ($I_{max}$) einen zuvor festgelegten Wert unterschreitet.

13. Verfahren nach einem der Ansprüche 1 bis 12, **dadurch gekennzeichnet, daß** der Transmissionsgrad oder der Reflexionsgrad des elektrochromen Elementes überwacht wird und daß die Spannung (U) abgeschaltet wird, wenn der Transmissionsgrad oder der Reflexionsgrad einen vorgegebenen Wert erreicht.

14. Verfahren nach einem der Ansprüche 1 bis 13, **dadurch gekennzeichnet, daß** die durch das elektrochrome Element seit Beginn des Umfärbevorganges geflossene Ladungsmenge ermittelt wird und daß die Spannung (U) abgeschaltet wird, wenn die geflossene Ladungsmenge einen vorgegebenen Wert erreicht.

15. Verfahren nach Anspruch 14, **dadurch gekennzeichnet, daß** die geflossene Ladungsmenge durch zeitliche Integration des Stromes (I) ermittelt wird.

**Claims**

1. Process for operating an electrochromic element which consists of at least the following layers.

   - a first electrode layer;
   - a first layer in which ions can be reversibly inserted;
   - a transparent ion-conductive layer;
   - a second layer in which ions can be reversibly inserted; and
- a second electrode layer;

where the first and / or the second layer, in which the ions can be reversibly inserted, is an electrochromic layer, and the other of these layers acts as counter-electrode to the other electrochromic layer, and where a voltage is applied to the electrode layers which causes a colour-change process, which possesses values in a redox-stability range of the system, and where the current (I) flowing through the electrochromic element is measured continuously **characterized by** the fact that; that in a starting stage of the colour-change process, the voltage (U) applied to the electrochromic element is increased or reduced steadily up to maximum to a final value ($U_{max}$) of the voltage specified as a function of temperature, where the temperature-dependence is determined by the design of the electrochromic element, but is independent of the area to be subjected to colour change; and that the voltage (U) is supplied during the further colour-change process as a function of the current (I), where the voltage (U) does not exceed in magnitude the magnitude of the final value ($U_{max}$) of the voltage.

2. Process in accordance with Claim 1, **characterized by** the fact that the temperature-dependence of the final value ($U_{max}$) of the voltage is provided by the equation

$$U_{max}=A - B \cdot T$$

where T is the temperature of the electrochromic element, and A and B are constants determined by the design of the electrochromic element.

3. Process in accordance with Claim 1 or 2, **characterized by** the fact that the total resistance ($R_{ges}$) of the electrochromic element in the starting stage of the colour-change process is calculated from the voltage (U) and the current (I).

4. Process in accordance with Claim 3, **characterized by** the fact that the total resistance ($R_{ges}$) of the electrochromic element is calculated from the quotient $\Delta U/\Delta I$ of the voltage difference ($\Delta U$) and the current difference ($\Delta I$) which are obtained from measurements of voltage (U) and current (I) at consecutive moments in time.

5. Process in accordance with Claim 4, **characterized by** the fact that the total resistance ($R_{ges}$) of the electrochromic element is calculated by averaging of several values of the quotient $\Delta U/\Delta I$ established at different moments in time.

6. Process in accordance with one of Claims 3 to 5, **characterized by** the fact that the temperature (T) of the electrochromic element is established from its total resistance ($R_{ges}$).

7. Process in accordance with one of the foregoing Claims, **characterized by** the fact that from the voltage (U), the current (I) and the total resistance ($R_{ges}$), a voltage ($U_{eff}$) is calculated which is effective electrochemically at the electrochromic layers.

8. Process in accordance with Claim 7, **characterized by** the fact that the voltage ($U_{eff}$) effective electrochemically at the electrochromic layers is calculated according to the equation:

$$U_{eff} = U - I \cdot D \cdot R_{ges}$$

where D is a correction variable dependent inter alia on the surface resistance of the electrochromic element.

9. Process in accordance with Claim 7 or 8, **characterized by** the fact that the voltage (U) applied to the electrochromic element is regulated such that the voltage ($U_{eff}$) effective electrochemically at the electrochromic layers does not exceed in magnitude a predetermined value ($U_{eff,max}$).

10. Process in accordance with Claim 9, **characterized by** the fact that, as long as the voltage ($U_{eff}$) effective at the electrochromic layers has not reached the maximum permissible value ($U_{eff,max}$) in magnitude, the voltage (U) is kept essentially constant at the final value ($U_{max}$).

11. Process in accordance with one of Claims 1 to 10, **characterized by** the fact that from the measured values determined for the current (I) during the colour change, a maximum current ($I_{max}$) is calculated.

12. Process in accordance with Claim 11, **characterized by** the fact that the voltage (U) is switched off as soon as the ratio of instantaneously flowing current (I) to maximum current ($I_{max}$) falls below a previously specified value.

13. Process in accordance with one of Claims 1 to 12, **characterized by** the fact that the transmittance or the reflectance of the electrochromic element is monitored and that the voltage (U) is switched off as soon as the transmittance or reflectance reaches a specified value.

14. Process in accordance with one of Claims 1 to 13, **characterized by** the fact that the quantity of electricity which has flowed through the electrochromic element since the commencement of the colour-change process is calculated and that the voltage (U) is switched off as soon as the quantity of electricity which has flowed reaches a specified value.

15. Process in accordance with Claim 14, **characterized by** the fact that the quantity of electricity which has flowed is established by integration of the current (I) over time.

**Revendications**

1. Procédé de commande d'un élément électrochrome qui est constitué au moins des couches suivantes :

    - une première couche d'électrode ;

    - une première couche dans laquelle des ions peuvent être implantés de manière réversible ;

    - une couche transparente conductrice d'ions ;

    - une deuxième couche dans laquelle des ions peuvent être implantés de manière réversible ; et

    - une deuxième couche d'électrode ;

    dans lequel la première et/ou la deuxième couche, dans laquelle des ions peuvent être implantés de manière réversible, est une couche électrochrome et l'autre de ces couches fonctionnant comme contre-électrode par rapport à l'autre couche électrochrome, dans lequel aux couches d'électrode est appliquée une tension qui provoque le processus de changement de couleur et qui présente des valeurs dans un domaine de stabilité redox, et qui est mesurée en continu par le courant (I) traversant l'élément électrochrome ; **caractérisé en ce que** dans une phase initiale du processus de changement de couleur, la tension (U) appliquée à l'élément électrochrome augmente ou diminue constamment au maximum jusqu'à une valeur finale de la tension ($U_{max}$) prédéfinie en fonction de la température, la dépendance à l'égard de la température étant fixée en fonction du type de construction, mais indépendamment de la surface de l'élément électrochrome à faire changer de couleur, et **en ce que** la tension (U) est conduite, au cours de la poursuite du processus de changement de couleur, en fonction du courant (I), la valeur absolue de la tension (U) ne dépassant pas la valeur absolue de la valeur finale de la tension ($U_{max}$).

2. Procédé selon la revendication 1, **caractérisé en ce que** la dépendance à l'égard de la température de la valeur finale ($U_{max}$) de la tension est donnée par l'équation

$$U_{max} = A - B \cdot T,$$

T étant la température de l'élément électrochrome et A et B étant des constantes déterminées par le type de construction de l'élément électrochrome.

3. Procédé selon la revendication 1 ou 2, **caractérisé en ce que** la résistance totale ($R_{ges}$) de l'élément électrochrome au cours de la phase initiale du processus de changement de couleur est déterminée à partir de la tension (U) et du courant (I).

4. Procédé selon la revendication 3, **caractérisé en ce que** la résistance totale ($R_{ges}$) de l'élément électrochrome est calculée à partir du quotient ($\Delta U/\Delta I$) de la différence de tension ($\Delta U$) et de la différence de courant ($\Delta I$) à des instants successifs.

5. Procédé selon la revendication 4, **caractérisé en ce que** la résistance totale ($R_{ges}$) de l'élément électrochrome est calculée par formation de la moyenne de plusieurs valeurs du quotient ($\Delta U/\Delta I$) déterminées à différents instants.

6. Procédé selon l'une des revendications 3 à 5, **caractérisé en ce que** la température (T) de l'élément électrochrome est déterminée à partir de sa résistance totale ($R_{ges}$).

7. Procédé selon l'une des revendications précédentes, **caractérisé en ce qu'**on calcule, à partir de la tension (U) du courant (I) ainsi que de la résistance totale($R_{ges}$), une tension ($U_{eff}$) qui agit de manière électrochimique sur les couches électrochromes.

8. Procédé selon la revendication 7, **caractérisé en ce que** la tension ($U_{eff}$) qui agit de manière électrochimique sur les couches électrochromes est calculée d'après l'équation

$$U_{eff} = U - I \cdot D \cdot R_{ges},$$

D étant une grandeur de correction qui dépend entre autres de la résistance des couches de l'élément électrochrome.

9. Procédé selon la revendication 7 ou 8, **caractérisé en ce que** la tension (U), appliquée à l'élément électrochrome, est régulée de manière que la valeur absolue de la tension ($U_{eff}$) qui agit de manière électrochimique sur les couches électrochromes, ne dépasse pas une valeur prédéterminée ($U_{eff.max}$).

**10.** Procédé selon la revendication 9, **caractérisé en ce que** tant que la tension ($U_{eff}$), qui agit sur les couches électrochromes, n'a pas atteint la valeur absolue de la valeur maximale admissible ($U_{eff.max}$), la tension ($U$) est maintenue sensiblement constante sur la valeur finale ($U_{max}$).

**11.** Procédé selon l'une des revendications 1 à 10, **caractérisé en ce qu'**on détermine pour le courant ($I$), un courant maximal ($I_{max}$) à partir des valeurs de mesure déterminées pendant le processus de changement de couleur.

**12.** Procédé selon la revendication 11, **caractérisé en ce que** la tension ($U$) est coupée lorsque le rapport du courant ($I$) circulant à l'instant au courant maximal ($I_{max}$) passe au-dessous d'une valeur fixée au préalable.

**13.** Procédé selon l'une des revendications 1 à 12, **caractérisé en ce que** le degré de transmission ou le degré de réflexion de l'élément électrochrome est surveillé et **en ce que** la tension ($U$) est coupée si le degré de transmission ou le degré de réflexion atteint une valeur prédéterminée.

**14.** Procédé selon l'une des revendications 1 à 13, **caractérisé en ce que** la quantité de charge, qui a circulé à travers l'élément électrochrome depuis le début du processus de changement de couleur, est déterminé et **en ce que** la tension ($U$) est coupée si la quantité de charge qui a circulé atteint une valeur prédéterminée.

**15.** Procédé selon la revendication 14, **caractérisé en ce que** la quantité de charge qui a circulé est déterminée par intégration dans le temps du courant ($I$).

Fig. 1

Fig. 2

EP 0 961 949 B1

# Fig. 3

Fig. 4

# Fig. 5

EP 0 961 949 B1

## Fig. 6